# EUROPEAN PATENT APPLICATION

(11) **EP 4 604 486 A1**
(43) Date of publication of application: **20.08.2025**
(21) Application number: 23884608.3
(22) Date of filing: 18.10.2023
(51) Int. Cl.: H04L 47/50

(54) **DETERMINISTIC SERVICE PROCESSING METHOD AND APPARATUS**

(30) Priority: 04.11.2022 CN 202211380712
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Peng, Beijing 100032 (CN); DU, Zongpeng, Beijing 100032 (CN); LI, Zhiqiang, Beijing 100032 (CN)
(74) Representative: Murgitroyd & Company
(86) International application number: PCT/CN2023/125205
(87) International publication number: WO 2024/093676

(57) **Abstract**

A method and apparatus for processing a deterministic service are provided, which relate to the field of communication technology. The method includes: determining a target forwarding path according to the deterministic service demand, wherein the target forwarding path includes at least two network nodes; in the case that the queuing scheduling mechanisms corresponding to the at least two network nodes are different, determining the target scheduling parameter corresponding to each of the at least two network nodes according to the queuing scheduling mechanism parameters corresponding to the routing nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node; and sending the target scheduling parameters to a deterministic service forwarding unit.

## Description

### CROSS-REFERENCE TO RELATED APPLICATION

The present application claims a priority to the Chinese patent application No. 202211380712.1 filed in China on November 4, 2022, a disclosure of which is incorporated herein by reference in its entirety.

### TECHNICAL FIELD

The present disclosure relates to the field of communication technology, and in particular, to a method and an apparatus for processing a deterministic service.

### BACKGROUND

There are many known deterministic network solutions. For an Internet Protocol (IP) bearer network, a data plane standard developed by the Internet Engineering Task Force (IETF) Deterministic Networking (DetNet) working group only defines a flow ID and a sequence number, but does not involve specific queue-related information. In fact, it cannot support deployment of the deterministic network. Therefore, the IETF DetNet is currently developing a standard for an enhanced data plane function. The existing network environment is complex. With the deployment of the deterministic network, there may be one deterministic service flow passing through devices that support different deterministic methods, that is, the one deterministic service flow needs to use a hybrid deterministic network queue method. In this case, there is no relevant solution for how to transmit the service flow.

### SUMMARY

The present disclosure is to provide a method and an apparatus for processing of a deterministic service, so as to solve the problem on how to transmit the service flow when the service flow needs to use a hybrid deterministic network queue method.

To achieve the above object, embodiments of the present disclosure provide a method for processing of a deterministic service, applied to a deterministic service control unit, including:
determining a target forwarding path according to a deterministic service demand, wherein the target forwarding path includes at least two network nodes;
in the case that queuing scheduling mechanisms corresponding to the at least two network nodes are different, determining a target scheduling parameter corresponding to each of the at least two network nodes according to queuing scheduling mechanism parameters corresponding to the two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
sending the target scheduling parameter to a deterministic service forwarding unit.

Optionally, the queuing scheduling mechanisms corresponding to the at least two network nodes include at least two scheduling mechanisms of a Time-Aware Shaper (TAS) scheduling mechanism, a Cycle Queuing Forwarding (CQF) scheduling mechanism, and a deadline based scheduling mechanism.

Optionally, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the determining the target scheduling parameter corresponding to each of the at least two network nodes according to the queuing scheduling mechanism parameters corresponding to the network nodes includes:
in the case that a queuing scheduling mechanism corresponding to a first network node is the TAS scheduling mechanism, determining, according to the TAS gate list and a first CQF delay, a time at which the first network node sends or receives a message; wherein in the target forwarding path, it reaches the first network node from a second network node via number N of third network nodes, the second network node corresponds to the TAS scheduling mechanism, the third network node corresponds to the CQF scheduling mechanism, and the first CQF delay is determined according to the number N and the CQF period; and/or
in the case that a queuing scheduling mechanism corresponding to a fourth network node is the CQF scheduling mechanism, determining, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes

Optionally, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the determining the target scheduling parameter corresponding to each of the at least two network nodes according to the queuing scheduling mechanism parameters corresponding to the network nodes includes:
in the case that a queuing scheduling mechanism corresponding to a seventh network node is the deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that a queuing scheduling mechanism corresponding to a tenth network node is the CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

Optionally, the queuing scheduling mechanisms corresponding to the at least two network nodes include a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes an expected remaining time of each network node;
the determining the target scheduling parameter corresponding to each of the at least two network nodes according to the queuing scheduling mechanism parameters corresponding to the at least two network nodes includes:
in the case that a queuing scheduling mechanism corresponding to a thirteenth network node is the TAS scheduling mechanism, determining, according to the TAS gate list and a third delay, a time at which the thirteenth network node sends or receives a message; wherein in the target forwarding path, it reaches the thirteenth network node from a fourteenth network node via number L of fifteenth network nodes, the fifteenth network node corresponds to the TAS scheduling mechanism, the fourteenth network node corresponds to the deadline based scheduling mechanism, and the third delay is determined according to a time during which the message is transmitted between the number L of fifteenth network nodes; and/or
in the case that a queuing scheduling mechanism corresponding to the fifteenth network node is the deadline based scheduling mechanism, determining, according to a fourth delay, an actual remaining time corresponding to the fifteenth network node; wherein in the target forwarding path, it reaches the fifteenth network node from a sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

Optionally, the sending the target scheduling parameter to the deterministic service forwarding unit includes:
encapsulating the target scheduling parameter using an Internet Protocol version 6 (IPv6) extension header and/or a Differentiated Services Code Point (DSCP) field and sending the encapsulated target scheduling parameter to the deterministic service forwarding unit; the target scheduling parameter is used by the network node to identify the target scheduling parameter and perform corresponding queuing scheduling processing.

The embodiments of the present disclosure further provide a method for processing of a deterministic service, applied to a deterministic service forwarding unit, including:
obtaining a target scheduling parameter corresponding to each network node in a target forwarding path, wherein the target forwarding path includes at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
controlling each of the network nodes to forward a message according to the target scheduling parameter.

Optionally, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the obtaining the target scheduling parameter corresponding to each network node in the target forwarding path includes:
in the case that a target scheduling parameter of a fourth network node includes a queuing identifier, and the queuing identifier indicates that a scheduling mechanism corresponding to the fourth network node is the CQF scheduling mechanism, determining, according to a size relationship between a first delay and a CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

Optionally, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the obtaining the target scheduling parameter corresponding to each network node in the target forwarding path includes:
in the case that a target scheduling parameter corresponding to a seventh network node includes a queuing identifier, and the queuing identifier indicates that a queuing scheduling mechanism corresponding to the seventh network node is the deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that the target scheduling parameter corresponding to a tenth network node includes a queuing identifier, and the queuing identifier indicates that the queuing scheduling mechanism corresponding to a tenth network node is a CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

Optionally, the queuing scheduling mechanisms corresponding to the at least two network nodes include a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes an expected remaining time of each network node;
the obtaining the target scheduling parameter corresponding to each network node in the target forwarding path includes:
in the case that a target scheduling parameter of a fifteenth network node includes a queuing identifier, and the queuing identifier indicates that a queuing scheduling mechanism corresponding to the fifteenth network node is the deadline based scheduling mechanism, determining, according to a fourth delay, an actual remaining time corresponding to the fifteenth network node; wherein in the target forwarding path, it reaches the fifteenth network node from a sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

The embodiments of the present disclosure further provide a deterministic service processing apparatus, applied to a deterministic service control unit, including:
a first determination module, configured to determine a target forwarding path according to a deterministic service demand, wherein the target forwarding path includes at least two network nodes;
a second determination module, configured to determine, in the case that queuing scheduling mechanisms corresponding to the at least two network nodes are different, a target scheduling parameter corresponding to each of the at least two network nodes according to queuing scheduling mechanism parameters corresponding to the two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
a first transmission module, configured to send the target scheduling parameter to a deterministic service forwarding unit.

The embodiments of the present disclosure further provide a deterministic service processing apparatus, applied to a deterministic service forwarding unit, including:
a first acquisition module, configured to obtain a target scheduling parameter corresponding to each network node in a target forwarding path, wherein the target forwarding path includes at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
a first processing module, configured to control each of the network nodes to forward a message according to the target scheduling parameter.

The embodiments of the present disclosure further provide a deterministic service processing apparatus, applied to a deterministic service control unit, including: a first transceiver and a first processor;
the first processor is configured to: determine a target forwarding path according to a deterministic service demand, wherein the target forwarding path includes at least two network nodes; in the case that queuing scheduling mechanisms corresponding to the at least two network nodes are different, determine a target scheduling parameter corresponding to each of the at least two network nodes according to queuing scheduling mechanism parameters corresponding to the two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
the first transceiver is configured to send the target scheduling parameter to a deterministic service forwarding unit.

The embodiments of the present disclosure further provide a deterministic service processing apparatus, applied to a deterministic service forwarding unit, including: a second transceiver and a second processor;
the second transceiver is configured to obtain a target scheduling parameter corresponding to each network node in a target forwarding path, wherein the target forwarding path includes at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
the second processor is configured to control each of the network nodes to forward a message according to the target scheduling parameter.

The embodiments of the present disclosure further provide a deterministic service processing apparatus, including: a transceiver, a processor, a memory, and a program or instruction stored in the memory and executable on the processor; wherein, the processor is configured to execute the program or the instruction to implement the steps of the method for processing a deterministic service as described above.

The embodiments of the present disclosure further provide a readable storage medium storing a program or instruction, wherein the program or instruction is used to be executed by a processor to implement the steps of the method for processing the deterministic service as described above.

Beneficial effects of the technical solutions of the present disclosure are as follows:
in the embodiments of the present disclosure, a target forwarding path is determined according to a deterministic service demand, and the target forwarding path includes at least two network nodes; in the case that the queuing scheduling mechanisms corresponding to the at least two network nodes are different, the target scheduling parameters corresponding to each of the at least two network nodes are determined according to the queuing scheduling mechanism parameters corresponding to the at least two network nodes; the target scheduling parameter is sent to a deterministic service forwarding unit. In the present disclosure, the target scheduling parameter corresponding to the target forwarding path corresponds to at least two queuing scheduling mechanisms. By using the target scheduling parameter, the service flow passing through the target forwarding path can be transmitted based on the hybrid deterministic queue mechanism.

### BRIEF DESCRIPTION OF THE DRAWINGS

FIG. 1 is a flowchart of a method for processing a deterministic service according to the embodiments of the present disclosure;
FIG. 2 is a schematic diagram of a path corresponding to a hybrid deterministic network queue and a schematic diagram of a path corresponding to a single deterministic network queue in the embodiments of the present disclosure;
FIG. 3 is a structural block diagram of a deterministic service control unit in the embodiments of the present disclosure;
FIG. 4 is another flowchart of the method for processing the deterministic service according to the embodiments of the present disclosure;
FIG. 5 is a module diagram of a deterministic service processing apparatus according to the embodiments of the present disclosure;
FIG. 6 is another module diagram of the deterministic service processing apparatus according to the embodiments of the present disclosure;
FIG. 7 is a structural block diagram of a deterministic service processing apparatus according to the embodiments of the present disclosure;
FIG. 8 is another structural block diagram of the deterministic service processing apparatus according to the embodiments of the present disclosure;
FIG. 9 is yet another structural block diagram of the deterministic service processing apparatus according to the embodiments of the present disclosure.

### DETAILED DESCRIPTION

In order to make the technical problems, technical solutions and advantages to be solved by the present disclosure clearer, a detailed description will be given below with reference to the accompanying drawings and specific embodiments.

It will be understood that reference throughout this specification to "one embodiment" or "an embodiment" means that a particular feature, structure, or characteristic associated with the embodiment is included in at least one embodiment of the present disclosure. Thus, the appearances of "in one embodiment" or "in an embodiment" in various places throughout this specification are not necessarily referring to the same embodiment. Furthermore, the particular features, structures or characteristics may be combined in any suitable manner in one or more embodiments.

In various embodiments of the present disclosure, it should be understood that the sequence numbers of the following processes does not mean the order of execution. The execution order of each process should be determined by its functions and internal logic, and the sequence numbers should not constitute any limitations on the implementations of the embodiments of the present disclosure.

Additionally, the terms "system" and "network" are often used interchangeably herein.

In the embodiments provided by the present disclosure, it should be understood that "B corresponding to A" means that B is associated with A, and B can be determined according to A. However, it should also be understood that determining B according to A does not mean that B is determined solely according to A, and B can also be determined according to A and/or other information.

To enable those of ordinary skill in the art to better understand the embodiments of the present disclosure, the following explanation is provided.

A deterministic network has changed a "best effort" forwarding principle of a traditional IP network, it uses a scheduling mechanism to control a forwarding delay and ensure an end-to-end deterministic service demand. Standard organizations such as IEEE/IETF have released a series of standards, and the 3rd Generation Partnership Project (3GPP) has also launched related layout and research. However, there is currently no mature end-to-end deterministic network solution for an operator network.

The mainstream deterministic network queuing scheduling solutions in the industry are as follows:
Time-Aware Shaper (TAS): a gate control list is configured for each device to control a sending time of a message, which is similar to a train timetable, specifying when a train arrives at or departs from a station;
Cycle Queuing Forwarding (CQF): N queues (usually 3 to 4) are configured for each device, wherein one queue is used for sending, and the other queues are used for receiving. According to a certain cycle, a sending queue becomes a receiving queue after the sending is completed, and the next receiving queue becomes the sending queue;
deadline based scheduling: setting a remaining time for a message. The shorter the remaining time, the higher the priority, making it easier to be sent.

The present disclosure takes into account the existing various deterministic network queuing scheduling situations. To address a practical future deployment, it establishes collaborative technologies for the deterministic data flow passing through different queue mechanisms, based on the queuing scheduling mechanisms such as the TAS, the CQF, and the deadline based scheduling.

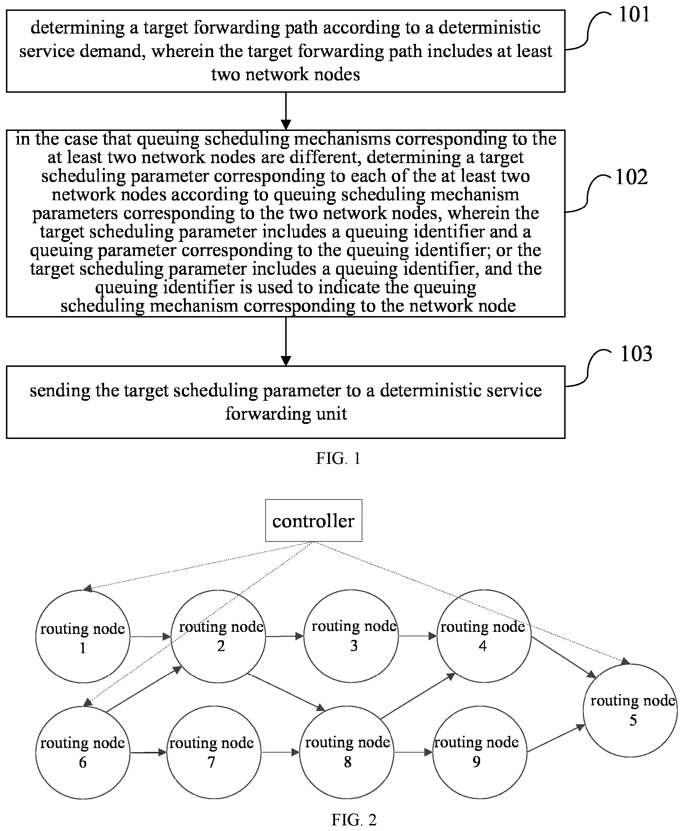

As shown in FIG. 1, the embodiments of the present disclosure provide a method for processing of a deterministic service, applied to a deterministic service control unit (such as a controller). The method includes the following steps.

Step 101: determining a target forwarding path according to a deterministic service demand, and the target forwarding path includes at least two network nodes.

In the embodiments of the present disclosure, the method for processing the deterministic service may serve as a method for processing a deterministic network service, and the deterministic service control unit may be a deterministic network control unit.

In addition, the determining the target forwarding path according to the deterministic service demand may involve determining the service traffic forwarding path according to the deterministic network service demand. The target forwarding path includes at least two network nodes, which can be understood as the service traffic forwarding path includes at least two network nodes.

In the embodiments of the present disclosure, a terminal (such as a client) sends a message request to a controller, which carries the service type, demands for network delay, jitter, etc., and service demand. The controller allocates a transmission path (i.e., the target forwarding path) and reserves resources according to the service demand.

Step 102: in the case that queuing scheduling mechanisms corresponding to the at least two network nodes are different, determining a target scheduling parameter corresponding to each of the at least two network nodes according to queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node.

Optionally, the queuing scheduling mechanisms corresponding to the at least two network nodes include at least two scheduling mechanisms of a Time-Aware Shaper (TAS) scheduling mechanism, a Cycle Queuing Forwarding (CQF) scheduling mechanism and a deadline based scheduling mechanism.

As shown in FIG. 2, network node 1-network node 2-network node 3-network node 4 represents a deterministic network path, such as a CQF, and network node 6-network node 7-network node 8-network node 9 represents another deterministic network path, such as a TAS. In an actual deployment, a data flow may pass through a path such as network node 6-network node 2-network node 8-network node 4-network node 5, which is a cross path and requires a hybrid deterministic network queue method.

The hybrid deterministic network queue method may also be network node 6 - network node 7 - network node 8 - network node 4 - network node 5, or network node 1 - network node 2 - network node 8 - network node 9 - network node 5.

In the embodiments of the present disclosure, three scenarios are described for the hybrid deterministic network queue.
Scenario 1: time synchronization + frequency synchronization (i.e., TAS+CQF)
TAS: set a gate list period T1 (which can reach a nanosecond level) for time-synchronized nodes to achieve timely receiving and sending;
CQF: set a cycle period T2 (usually at a microsecond level) for frequency synchronized nodes, and the delay of each message is a multiple of the T2 (usually (2~4)* T2).

The specific method is as follows.
(1) For a node primarily on a time-synchronized path (i.e., nodes corresponding to the TAS, such as network nodes 6 and 8 in the hybrid deterministic network queue shown in FIG. 2) need to ensure that a deterministic message can be sent immediately upon arrival.
   Each node jointly maintains a gate control list to control the sending and waiting time of each message. The original method does not take into account the transmission delay, so the gate control list of each node is turned on/off at the same time; after passing through n frequency synchronized nodes, the subsequent gate control list needs to be delayed by (2~4)n * T2 + path transmission delay t' (which can be negligible for a short path), that is, a CQF time (the time required to pass through n frequency synchronized nodes) is estimated, and the TAS gate control list is set according to the estimated CQF time.
(2) For a node primarily on a frequency-synchronized path (i.e., nodes corresponding to the CQF, such as network nodes 2 and 4 in the hybrid deterministic network queue shown in FIG. 2), a delay of a deterministic message on the synchronization path nodes is T3:
   delay T3 ≤ T2, normal receiving and sending occur;
   delay T3 ≥ T2, normal receiving occurs, and the message is arranged for sending in the next cycle.
   Scenario 2: time synchronization + frequency synchronization (deadline+CQF)
   Deadline: according to the pre-allocated delay, the closer to the deadline, the higher the priority. The deadline of each node = total delay/number of nodes;
   CQF: setting the cycle period T2 (usually at a microsecond level) for the frequency synchronized nodes, and the delay of each message is a multiple of T2 (usually (2~4)* T2).

The specific method is as follows:
(1) For a node primarily on a Deadline path (i.e., node that corresponds to the deadline based scheduling mechanism), it adds the delay of the frequency synchronization path to the deadline delay of the subsequent nodes: the delay of the CQF node is relatively stable;
(2) For a node primarily on a frequency synchronization path (i.e., corresponding to the CQF node), it considers the expected deadline path delay T3:
   if T3/T2≤1, normal receiving and sending occur;
   if 3 (configurable) ≥ T3/T2 ≥ 1, it is arranged for sending in the next cycle;
   if n≥T3/T2≥3, it is arranged for sending in the next cycle, and the cycle is then determined according to the result of n/3, where n is the ratio of the delay on the deadline path to the CQF period. That is, after being subjected to n cycles, it travels from the previous hop to the next hop in the CQF path. Based on the ratio and the remainder, the corresponding cycle for the next hop is determined. For example, if the result (remainder) of n/3 is a, then if a≤1, normal receiving and sending occur, if 3 (configurable)≥a>1, it is arranged in the next cycle.

For a node corresponding to the CQF, the expected deadline path delay is estimated, and then the CQF period is adjusted accordingly.

### Scenario 3: time synchronization (TAS+deadline)

TAS: setting a gate list period T1 (which can reach a nanosecond level) for the time-synchronized nodes to achieve timely receiving and sending.

Deadline: according to the pre-allocated delay, the closer to the deadline, the higher the priority. The deadline of each node = total delay/number of nodes.

The specific method is as follows.
(1) For a node primarily on a TAS path (i.e. a node corresponding to the TAS), it needs to ensure that a deterministic message can be sent immediately upon arrival;
   each node jointly maintains a gate control list to control the sending and waiting time of each message. The original method does not take into account the transmission delay, so the gate control list of each node is turned on/off at the same time. For the node that has been subjected to n deadlines, the subsequent gate list needs to be delayed by n*deadline+path transmission delay t'; that is, the delay of the node that has been subjected to n deadlines is estimated, and the TAS gate list is adjusted based on this.
(2) For a node primarily on a deadline path (i.e., a node corresponding to the deadline based scheduling mechanism), a delay of the TAS path is added to the deadline delay of the subsequent node, wherein the delay of the TSA can be obtained.

Based on the analysis of the above three scenarios, the queue mechanism parameter can be set as follows.

A control plane configures different queue mechanism parameters for respective different paths, such as a period size, a cycle interval, etc.

The data plane carries two types of identifiers: a Queuing ID and a Queuing Parameter.

Queuing ID: used by a routing device to identify the queuing mechanism.

Queuing Parameter: used by a routing device (i.e., a network node) to forward a message according to the corresponding parameter.

Specifically, for time synchronization, the above queuing parameter includes: a size of the period, that is, the size of the threshold control list period T1.

For frequency synchronization, the above queuing parameter includes: period size (i.e., the size of the cycle period T2) and a corresponding relationship. The corresponding relationship specifically refers to the corresponding relationship between a queue of an upstream network node and a queue of a downstream network node, that is, which of the three queues sent from the upstream node to the downstream node is being referred to.

Other parameters: timestamps, etc.

In the embodiments of the present disclosure, various queue mechanisms need to carry multiple sets of IDs and corresponding queuing parameters.

In the embodiments of the present disclosure, in the case that the queuing scheduling mechanism corresponding to at least two network nodes included in the target forwarding path is the same, such as one of the TAS, the CQF, or the deadline, the corresponding queuing identifier, that is, the queuing parameter, is carried.

In the case that the queuing scheduling mechanisms corresponding to the at least two network nodes are different, a target scheduling parameter corresponding to each of the at least two network nodes is determined.

Step 103: sending the target scheduling parameter to a deterministic service forwarding unit.

The target scheduling parameter corresponding to each network node in the target forwarding path is sent to the deterministic service forwarding unit.

The deterministic service forwarding unit may be a deterministic network forwarding unit. The sending of the target scheduling parameter to the deterministic service forwarding unit may be sending the target scheduling parameter to the deterministic network forwarding unit.

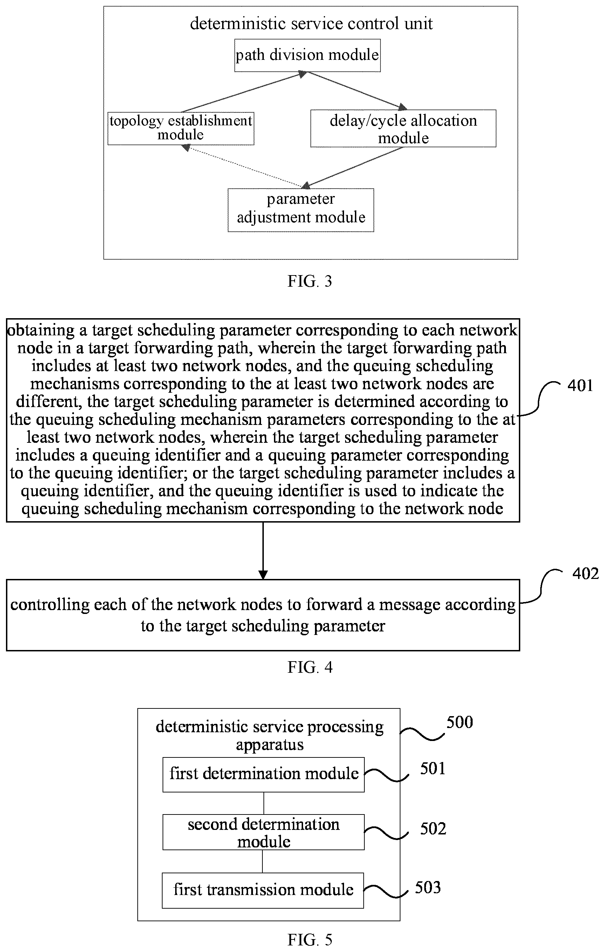

In the embodiments of the present disclosure, the deterministic service control unit collects the traffic demands of each user and application, establishes a topological path, and a corresponding forwarding parameter (a target scheduling parameter). As shown in FIG. 3, the deterministic service control unit needs to set up a "topology establishment module", a "path division module", a "delay/cycle allocation module", and a "parameter adjustment module".

The topology establishment module is configured to establish a topology structure of the deterministic network as a basis for subsequent path selection.

The path planning module is configured to determine the target forwarding path according to a deterministic service demand.

The delay/cycle allocation module is configured to allocate references such as a delay or cycle for each queuing scheduling mechanism.

The parameter adjustment module is configured to, in the case that queuing scheduling mechanisms corresponding to the at least two network nodes are different, determine a target scheduling parameter corresponding to each of the at least two network nodes according to queuing scheduling mechanism parameters corresponding to the at least two network nodes.

In the embodiments of the present disclosure, a target forwarding path is determined according to a deterministic service demand, and the target forwarding path includes at least two network nodes; in the case that the queuing scheduling mechanisms corresponding to the at least two network nodes are different, the target scheduling parameters corresponding to each of the at least two network nodes are determined according to the queuing scheduling mechanism parameters corresponding to the at least two network nodes; the target scheduling parameter is sent to a deterministic service forwarding unit. In the present disclosure, the target scheduling parameter corresponding to the target forwarding path corresponds to at least two queuing scheduling mechanisms. By using the target scheduling parameter, the service flow passing through the target forwarding path can be transmitted based on the hybrid deterministic queue mechanism.

As an optional implementation, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the determining a target scheduling parameter corresponding to each of the at least two network nodes according to the queuing scheduling mechanism parameters corresponding to the at least two network nodes includes:
in the case that a queuing scheduling mechanism corresponding to a first network node is the TAS scheduling mechanism, determining, according to the TAS gate list and a first CQF delay, a time at which the first network node sends or receives a message; wherein in the target forwarding path, it reaches the first network node from a second network node via number N of third network nodes, the second network node corresponds to the TAS scheduling mechanism, the third network node corresponds to the CQF scheduling mechanism, and the first CQF delay is determined according to the number N and the CQF period; and/or
in the case that a queuing scheduling mechanism corresponding to a fourth network node is the CQF scheduling mechanism, determining, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

Optionally, the CQF period corresponding to a time at which the fourth network node sends a message refers to which CQF period that the message sending time of the fourth network node falls into, and the CQF period corresponding to the message receiving time refers to which CQF period the message receiving time of the fourth network node falls into.

For example, the target forwarding path is network node 1→network node 2-network node 3→network node 4. Network nodes 1 and 4 correspond to the TAS, and network nodes 2 and 3 correspond to the CQF. The time for the network node 4 to send a message is determined according to the TAS gate list and N*CQF period (first CQF delay), where N is 2, which indicates the node has been subjected to two CQF queuing scheduling mechanisms. Specifically, this is based on the sending time or receiving time indicated by the TAS gate list + 2*CQF period.

For another example, the target forwarding path is network node 1-network node 2-network node 3-network node 4. The network nodes 1 and 4 correspond to the CQF, the network nodes 2 and 3 correspond to the TAS. The CQF period corresponding to a time at which the network node 4 sends or receives a message is determined according to the size relationship between the first delay and the CQF period. Specifically, the time required for the message to pass through the network nodes 2 and 3 (i.e., the first delay) is determined according to the TAS gate list. If the first delay is less than or equal to the size of the CQF period, then receiving and sending occur within the current CQF period. If the first delay is greater than or equal to the size of the CQF period, then the receiving occurs in the current CQF period, and the sending occurs in the next CQF period.

As another optional implementation, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the determining a target scheduling parameter corresponding to each of the at least two network nodes according to the queuing scheduling mechanism parameters corresponding to the at least two network nodes includes:
in the case that a queuing scheduling mechanism corresponding to a seventh network node is the deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that a queuing scheduling mechanism corresponding to a tenth network node is the CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

For example, the target forwarding path is network node 1-network node 2-network node 3→network node 4. The network nodes 1 and 4 correspond to the deadline based scheduling mechanism, and the network nodes 2 and 3 correspond to the CQF. The actual remaining time corresponding to the network node 4 is determined according to the second CQF delay and the expected remaining time corresponding to the network node 4. The second CQF delay is P*CQF period, where P is 2.

For another example, the target forwarding path is network node 1-network node 2-network node 3→network node 4. The network nodes 1 and 4 correspond to the deadline based scheduling mechanism, and the network nodes 2 and 3 correspond to the CQF. The CQF period corresponding to a time at which the network node 4 sends or receives a message is determined according to the size relationship between the ratio of the second delay to the CQF period T2 and a preset threshold. The second delay T3 is determined according to a time during which the message determined by the TAS gate list is transmitted between the network nodes 2 and 3. Assuming that the preset threshold is 1, if T3/T2≤1, receiving and sending occur within the current CQF period; if 3 (configurable)≥T3/T2≥1, the sending and the receiving occur in the next CQF period, and if n≥T3/T2≥3, the sending and the receiving occur in the next CQF period, and the period is set based on the result of n/3.

As another optional implementation, the queuing scheduling mechanism corresponding to the at least two network nodes includes a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes the expected remaining time of each network node;
the determining a target scheduling parameter corresponding to each of the at least two network nodes according to the queuing scheduling mechanism parameters corresponding to the at least two network nodes includes:
in the case that the queuing scheduling mechanism corresponding to the thirteenth network node is a TAS scheduling mechanism, determining, according to the TAS gate list and the third delay, the time at which the thirteenth network node sends the message; wherein in the target forwarding path, it reaches the thirteenth network node from the fourteenth network node via number L of fifteenth network nodes, the fifteenth network node corresponds to the TAS scheduling mechanism, the fourteenth network node corresponds to the deadline based scheduling mechanism, and the third delay is determined according to a time during which the message is transmitted between the number L of fifteenth network nodes; and/or
in the case that the queuing scheduling mechanism corresponding to the fifteenth network node is a deadline based scheduling mechanism, the actual remaining time corresponding to the fifteenth network node is determined according to the fourth delay; wherein, the target forwarding path reaches the fifteenth network node from the sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

For example, the target forwarding path is network node 1-network node 2-network node 3-network node 4. The network nodes 1 and 4 correspond to the TAS scheduling mechanism, and the network nodes 2 and 3 correspond to the deadline based scheduling mechanism. The time at which the network node 4 sends or receives a message is determined according to the TAS gate list and the third delay, and the third delay is determined according to the time required for the message to pass through network nodes 2 and 3. The time for sending or receiving the message corresponding to the network node 4 is the time indicated by the TAS gate list plus the third delay.

For another example, the target forwarding path is network node 1-network node 2-network node 3→network node 4. The network nodes 1 and 4 correspond to the deadline based scheduling mechanism, and the network nodes 2 and 3 correspond to the TAS scheduling mechanism. The actual remaining time corresponding to the network node 4 is determined according to the fourth delay, the fourth delay is the time required for the message to pass through the network nodes 2 and 3 determined according to the TAS gate list. The actual remaining time corresponding to the network node 4 is the expected remaining time corresponding to the network node 4 minus the fourth delay.

Optionally, the sending the target scheduling parameter to the deterministic service forwarding unit includes:
sending the target scheduling parameter to the deterministic service forwarding unit through an Internet Protocol Version 6 (IPv6) extension header and/or a Differentiated Services Code Point (DSCP) field.

For example, in the case that the target scheduling parameter is sent through an IPv6 extension header, the target scheduling parameter can be placed in a Hop By Hop (HBH) option header and a Destination Option Header (DOH). For example, for a CQF queuing scheduling mechanism, the target scheduling parameter includes a queuing identifier and a period identifier of the CQF queuing scheduling mechanism, and for a deadline based scheduling mechanism, the target scheduling parameter includes a queuing identifier, an expected delay, and an actual delay of the deadline based scheduling mechanism.

For another example, in the case that the target scheduling parameter is transmitted through the DSCP field, it can be implemented in the following two ways:
implementation 1: carrying the queuing identifier through the DSCP field and carrying the queuing parameter through an extension header;
implementation 2: carrying the queuing identifier and the queuing parameter through the DSCP field. This implementation is used when the number of bits occupied by the queuing parameter is relatively small, such as when the period identifier ranges from 0 to 3. Since the DSCP field is in the message header, high-speed processing is achieved in the absence of subsequent parameters.

In the embodiments of the present disclosure, the method of carrying the target scheduling parameter is defined, which retains more differentiated processing logic in the control plane. This facilitates the standardization of the IP protocol and can be decoupled from the specific solution for implementing the queue technology, thereby promoting a large-scale deployment of the deterministic network.

In the embodiments of the present disclosure, a target forwarding path is determined according to a deterministic service demand, and the target forwarding path includes at least two network nodes; in the case that the queuing scheduling mechanisms corresponding to the at least two network nodes are different, the target scheduling parameters corresponding to each of the at least two network nodes are determined according to the queuing scheduling mechanism parameters corresponding to the at least two network nodes; the target scheduling parameter is sent to a deterministic service forwarding unit. In the present disclosure, the target scheduling parameter corresponding to the target forwarding path corresponds to at least two queuing scheduling mechanisms. By using the target scheduling parameter, the service flow passing through the target forwarding path can be transmitted based on the hybrid deterministic queue mechanism.

As shown in FIG. 4, the embodiments of the present disclosure further provide a method for processing of a deterministic service, applied to a deterministic service forwarding unit, including:
step 401: obtaining a target scheduling parameter corresponding to each network node in a target forwarding path, wherein the target forwarding path includes at least two network nodes, and the queuing scheduling mechanisms corresponding to the at least two network nodes are different, and the target scheduling parameter is determined according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
Step 402: controlling each of the network nodes to forward a message according to the target scheduling parameter.

In the embodiments of the present disclosure, the target scheduling parameters corresponding to the target forwarding path correspond to at least two queuing scheduling mechanisms. By using the target scheduling parameter, the service flow passing through the target forwarding path can be transmitted based on the hybrid deterministic queue mechanism.

Optionally, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the obtaining of the target scheduling parameter corresponding to each network node in the target forwarding path includes:
in the case that the target scheduling parameter of the fourth network node includes a queuing identifier, and the queuing identifier indicates that the scheduling mechanism corresponding to the fourth network node is a CQF scheduling mechanism, determining, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

Optionally, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the obtaining of the target scheduling parameter corresponding to each network node in the target forwarding path includes:
in the case that the target scheduling parameter corresponding to the seventh network node includes a queuing identifier, and the queuing identifier indicates that the queuing scheduling mechanism corresponding to the seventh network node is a deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that the target scheduling parameter corresponding to the tenth network node include a queuing identifier, and the queuing identifier indicates that the queuing scheduling mechanism corresponding to the tenth network node is a CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

Optionally, the queuing scheduling mechanisms corresponding to the at least two network nodes include a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes the expected remaining time of each network node;
the obtaining of the target scheduling parameter corresponding to each network node in the target forwarding path includes:
in the case that the target scheduling parameter of the fifteenth network node includes a queuing identifier, and the queuing identifier indicates that the queuing scheduling mechanism corresponding to the fifteenth network node is a deadline based scheduling mechanism, the actual remaining time corresponding to the fifteenth network node is determined according to the fourth delay; wherein, the target forwarding path reaches the fifteenth network node from the sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

In the embodiments of the present disclosure, the information carried by the data plane is encapsulated by the network device. Whether the content is carried or modified in each hop depends on the specific queue. For example, the TAS is mainly implemented in the control plane, and the data plane does not need to be modified. The CQF data plane needs to carry the period identifier (0~3) of the CQF period, which can be configured through the control plane or carried by the data plane and needs to be changed hop by hop. The deadline method requires more fields to encapsulate time information and needs to be changed hop by hop.

As shown in FIG. 5, the embodiments of the present disclosure further provide a deterministic service processing apparatus 500, applied to a deterministic service control unit, including:
a first determination module 501, configured to determine a target forwarding path according to a deterministic service demand, wherein the target forwarding path includes at least two network nodes;
a second determining module 502, configured to determine, in the case that the queuing scheduling mechanisms corresponding to the at least two network nodes are different, a target scheduling parameter corresponding to each of the at least two network nodes according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, the queuing identifier is used to indicate the queuing scheduling mechanism corresponding to the network node;
the first transmission module 503, configured to send the target scheduling parameter to the deterministic service forwarding unit.

Optionally, the queuing scheduling mechanisms corresponding to the at least two network nodes include at least two scheduling mechanisms of a Time-Aware Shaper (TAS) scheduling mechanism, a Cycle Queuing Forwarding (CQF) scheduling mechanism and a deadline based scheduling mechanism.

Optionally, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the second determination module is configured to, in the case that a queuing scheduling mechanism corresponding to a first network node is the TAS scheduling mechanism, determine, according to the TAS gate list and a first CQF delay, a time at which the first network node sends or receives a message; wherein in the target forwarding path, it reaches the first network node from a second network node via number N of third network nodes, the second network node corresponds to the TAS scheduling mechanism, the third network node corresponds to the CQF scheduling mechanism, and the first CQF delay is determined according to the number N and the CQF period; and/or
in the case that a queuing scheduling mechanism corresponding to a fourth network node is the CQF scheduling mechanism, determining, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

Optionally, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the second determination module is configured to, in the case that a queuing scheduling mechanism corresponding to a seventh network node is the deadline based scheduling mechanism, determine, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that a queuing scheduling mechanism corresponding to a tenth network node is the CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

Optionally, the queuing scheduling mechanisms corresponding to the at least two network nodes include a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes the expected remaining time of each network node;
the second determining module is configured to, in the case that the queuing scheduling mechanism corresponding to the thirteenth network node is the TAS scheduling mechanism, determine, according to the TAS gate list and a third delay, a time at which the thirteenth network node sends or receives a message; wherein in the target forwarding path, it reaches the thirteenth network node from a fourteenth network node via number L of fifteenth network nodes, the fifteenth network node corresponds to the TAS scheduling mechanism, the fourteenth network node corresponds to the deadline based scheduling mechanism, and the third delay is determined according to a time during which the message is transmitted between the number L of fifteenth network nodes; and/or
in the case that a queuing scheduling mechanism corresponding to the fifteenth network node is the deadline based scheduling mechanism, determine, according to a fourth delay, an actual remaining time corresponding to the fifteenth network node; wherein in the target forwarding path, it reaches the fifteenth network node from a sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

Optionally, the first transmission module is configured to encapsulate the target scheduling parameter using an Internet Protocol version 6 (IPv6) extension header and/or a Differentiated Services Code Point (DSCP) field and send the encapsulated target scheduling parameter to the deterministic service forwarding unit; the target scheduling parameter is used by the network node to identify the target scheduling parameter and perform corresponding queuing scheduling processing.

In the embodiments of the present disclosure, a target forwarding path is determined according to a deterministic service demand, and the target forwarding path includes at least two network nodes; in the case that the queuing scheduling mechanisms corresponding to the at least two network nodes are different, the target scheduling parameters corresponding to each of the at least two network nodes are determined according to the queuing scheduling mechanism parameters corresponding to the at least two network nodes; the target scheduling parameter is sent to a deterministic service forwarding unit. In the present disclosure, the target scheduling parameter corresponding to the target forwarding path corresponds to at least two queuing scheduling mechanisms. By using the target scheduling parameter, the service flow passing through the target forwarding path can be transmitted based on the hybrid deterministic queue mechanism.

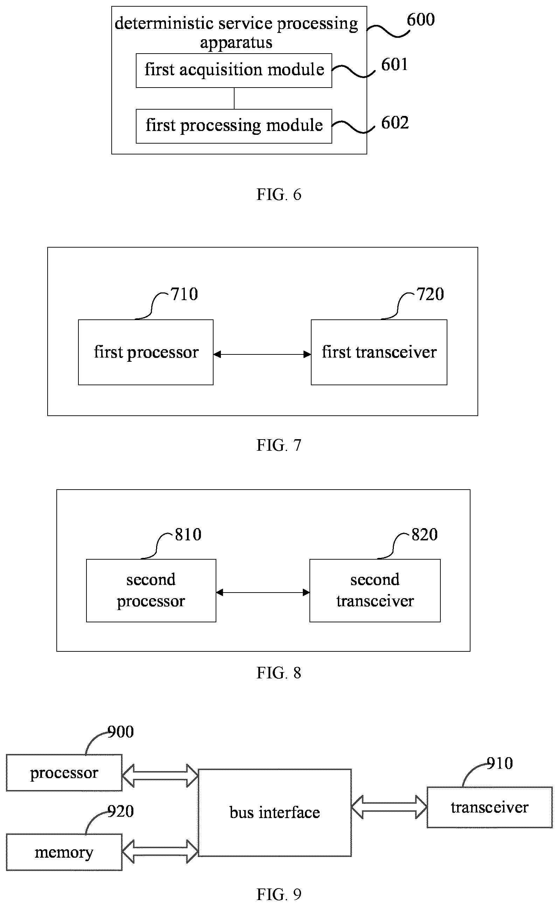

As shown in FIG. 6, the embodiments of the present disclosure further provide a deterministic service processing apparatus 600, applied to a deterministic service forwarding unit, including:
a first acquisition module 601, configured to obtain a target scheduling parameter corresponding to each network node in a target forwarding path, wherein the target forwarding path includes at least two network nodes, and the queuing scheduling mechanisms corresponding to the at least two network nodes are different, and the target scheduling parameter is determined according to the queuing scheduling mechanism parameters corresponding to the at least two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
the first processing module 602, configured to control each of the network nodes to forward a message according to the target scheduling parameter.

Optionally, the queuing scheduling mechanisms corresponding to the at least two network nodes include a Time-Aware Shaper (TAS) scheduling mechanism and a Cycle Queuing Forwarding (CQF) scheduling mechanism, the queuing scheduling mechanism parameter corresponding to the TAS scheduling mechanism includes a TAS gate list, the queuing scheduling mechanism parameter corresponding to the CQF scheduling mechanism includes a CQF period, and the TAS gate list is used to indicate a time at which each network node sends a message; and
the first acquisition module is configured to, in the case that a queuing scheduling mechanism corresponding to a fourth network node is the CQF scheduling mechanism, determine, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

Optionally, the queuing scheduling mechanisms corresponding to the at least two network nodes include a Cycle Queuing Forwarding (CQF) scheduling mechanism and a deadline based scheduling mechanism, the queuing scheduling mechanism parameter corresponding to the CQF scheduling mechanism includes a CQF period, and the queuing scheduling mechanism parameter corresponding to the deadline based scheduling mechanism includes an expected remaining time of each network node; and
the first acquisition module is configured to, in the case that the target scheduling parameter corresponding to the seventh network node includes a queuing identifier and the queuing identifier indicates that the queuing scheduling mechanism corresponding to the seventh network node is a deadline based scheduling mechanism, determine, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that the target scheduling parameter corresponding to the tenth network node include a queuing identifier, and the queuing identifier indicates that the queuing scheduling mechanism corresponding to the tenth network node is a CQF scheduling mechanism, determine, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

Optionally, the queuing scheduling mechanisms corresponding to the at least two network nodes include a Time-Aware Shaper (TAS) scheduling mechanism and a deadline based scheduling mechanism, and the queuing scheduling mechanism parameter corresponding to the TAS scheduling mechanism includes a TAS gate list, and the TAS gate list is used to indicate a time at which each network node sends a message; the queuing scheduling mechanism parameter corresponding to the deadline based scheduling mechanism includes the expected remaining time of each network node;
the first acquisition module is configured to, in the case that the target scheduling parameter of the fifteenth network node includes a queuing identifier and the queuing identifier indicates that the queuing scheduling mechanism corresponding to the fifteenth network node is a deadline based scheduling mechanism, determine the actual remaining time corresponding to the fifteenth network node according to the fourth delay; wherein the target forwarding path reaches the fifteenth network node from the sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

In the embodiments of the present disclosure, the target scheduling parameters corresponding to the target forwarding path correspond to at least two queuing scheduling mechanisms. By using the target scheduling parameter, the service flow passing through the target forwarding path can be transmitted based on the hybrid deterministic queue mechanism.

As shown in FIG. 7, the embodiments of the present disclosure further provide a deterministic service processing apparatus, applied to a deterministic service control unit, and includes: a first transceiver 720 and a first processor 710;
the first processor 710 is configured to determine a target forwarding path according to a deterministic service demand, wherein the target forwarding path includes at least two network nodes; in the case that queuing scheduling mechanisms corresponding to the at least two network nodes are different, determine a target scheduling parameter corresponding to each of the at least two network nodes according to queuing scheduling mechanism parameters corresponding to the two network nodes, wherein the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
the first transceiver 720 is configured to send the target scheduling parameter to the deterministic service forwarding unit.

It should be noted that the apparatus is an apparatus corresponding to the method embodiments performed by the deterministic service control unit. All implementations of the above method embodiments can be applied to the device embodiments and can achieve the same technical effect, which will not be elaborated further herein.

As shown in FIG. 8, the embodiments of the present disclosure further provide a deterministic service processing apparatus, applied to a deterministic service forwarding unit, including: a second transceiver 820 and a second processor 810;
the second transceiver 820 is configured to obtain a target scheduling parameter corresponding to each network node in a target forwarding path, wherein the target forwarding path includes at least two network nodes, and the queuing scheduling mechanisms corresponding to the at least two network nodes are different, and the target scheduling parameter is determined according to the queuing scheduling mechanism parameters corresponding to the at least two network nodes, and the target scheduling parameter includes a queuing identifier and a queuing parameter corresponding to the queuing identifier; or the target scheduling parameter includes a queuing identifier, and the queuing identifier is used to indicate the queuing scheduling mechanism corresponding to the network node;
the second processor 810 is configured to control each of the network nodes to forward a message according to the target scheduling parameter.

It should be noted that the apparatus is an apparatus corresponding to the method embodiments performed by the deterministic service control unit. All implementations of the above method embodiments can be applied to the device embodiments and can achieve the same technical effect, which will not be elaborated further herein.

As shown in FIG. 9, the embodiments of the present disclosure further provide a deterministic service processing apparatus, as shown in FIG. 9, including a transceiver 910, a processor 900, a memory 920, and a program or instruction stored in the memory 920 and executable on the processor 900; the processor 900 is configured to execute the program or the instruction to implement the steps of the aforementioned method.

The transceiver 910 is configured to receive and send data under the control of the processor 900.

As shown in FIG. 9, the bus architecture may include any number of interconnected buses and bridges, and connects various circuits including one or more processors represented by the processor 900 and the memory represented by the memory 920. The bus architecture can also link together various other circuits such as peripherals, voltage regulators, and power management circuits, which are all well known in the art and therefore will not be described further herein. The bus interface provides the interface. The transceiver 910 may be a plurality of elements, including a transmitter and a receiver, to allow for communication with various other apparatuses on the transmission medium. The processor 900 is responsible for managing the bus architecture and general processing, and the memory 920 can store data used by the processor 900 when performing operations.

In the embodiments of the present disclosure, a readable storage medium of storing a program or instruction is provided, wherein the program or instruction is used to be executed by a processor to implement the steps in the method for processing the deterministic service as described above, and the same technical effect can be achieved. To avoid repetition, this will not be elaborated further here.

The processor is a processor in the deterministic service processing apparatus described in the above embodiments. The readable storage medium includes a computer readable storage medium, such as a computer Read-Only Memory (ROM), a Random Access Memory (RAM), a magnetic disk or an optical disk.

It should be further explained that the terminal described in this specification includes but are not limited to smart phones, tablet computers, etc., and many of the functional components described are referred to as modules in order to more particularly emphasize independence of their implementation.

In the embodiments of the present disclosure, the module can be implemented with software so that it can be executed by various types of processors. For example, an identified executable code module may include one or more physical or logical blocks of computer instructions, for example, it can be constructed as an object, process or function. Nevertheless, the executable code of the identified module does not need to be physically located together, but can consist of different instructions stored in different locations, and when these instructions are logically combined together, they form the module and realize the specified purpose of the module.

In fact, the executable code module can be a single instruction or many instructions, and can even be distributed on a plurality of different code segments, distributed among different programs, and distributed across a plurality of memory devices. Similarly, operational data can be identified in the module, and can be implemented and organized in the data structure of any appropriate type according to any appropriate form. The operational data can be collected as a single data set, or can be distributed in different locations (including on different storage devices), and at least in part, it may exist solely as an electronic signal within a system or network.

When a module can be implemented using software, considering the level of existing hardware technology, it is possible for those skilled in the art to build a corresponding hardware circuit to implement the corresponding function of the module that can be implemented by software without considering the cost. The hardware circuit includes a conventional Very Large Scale Integration (VLSI) circuit or gate array and existing semiconductors such as logic chips, transistors, or other discrete components. The module can also be implemented by a programmable hardware device, such as a field programmable gate array, a programmable array logic, a programmable logic device, etc.

The above exemplary embodiments are described with reference to the accompanying drawings, and many different forms and embodiments are feasible without departing from the spirit and teachings of the present disclosure. Therefore, the present disclosure should not be constructed as a limitation of the exemplary embodiments proposed herein. More specifically, these exemplary embodiments are provided so that the present disclosure will be complete and thorough, and the scope of the present disclosure will be conveyed to those skilled in the art. In these drawings, the component sizes and relative sizes may be exaggerated for clarity. The terms used here are only based on the purpose of describing specific exemplary embodiments and are not intended to be limiting. As used herein, unless the text clearly indicates otherwise, the singular forms "one", "an" and "the" are intended to include these multiple forms. It will be further understood that the terms "comprising" and/or "including" when used in this specification indicate the presence of the features, integers, steps, operations, components and/or components, but do not exclude the presence or increase of one or more other features, integers, steps, operations, components, components and/or their groups. Unless otherwise indicated, when stated, a range of values includes the upper and lower limits of that range and any subranges therebetween.

The above are preferred embodiments of the present disclosure. It should be noted that for those of ordinary skill in the art, improvements and modifications can be made without departing from the principles described in the present disclosure. These improvements and modifications should also be considered within the protection scope of the present disclosure.

## Claims

1. A method for processing of a deterministic service, applied to a deterministic service control unit, the method comprising:
determining a target forwarding path according to a deterministic service demand, wherein the target forwarding path comprises at least two network nodes;
in the case that queuing scheduling mechanisms corresponding to the at least two network nodes are different, determining a target scheduling parameter corresponding to each of the at least two network nodes according to queuing scheduling mechanism parameters corresponding to the two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
sending the target scheduling parameter to a deterministic service forwarding unit.

2. The method according to claim 1, wherein the queuing scheduling mechanisms corresponding to the at least two network nodes comprise at least two scheduling mechanisms of a Time-Aware Shaper (TAS) scheduling mechanism, a Cycle Queuing Forwarding (CQF) scheduling mechanism, and a deadline based scheduling mechanism.

3. The method according to claim 1 or 2, wherein the queuing scheduling mechanisms corresponding to the at least two network nodes comprise a Time-Aware Shaper (TAS) scheduling mechanism and a Cycle Queuing Forwarding (CQF) scheduling mechanism, the queuing scheduling mechanism parameter corresponding to the TAS scheduling mechanism comprises a TAS gate list, the queuing scheduling mechanism parameter corresponding to the CQF scheduling mechanism comprises a CQF period, and the TAS gate list is used to indicate a time at which each network node sends a message; and
the determining the target scheduling parameter corresponding to each of the at least two network nodes according to the queuing scheduling mechanism parameters corresponding to the network nodes comprises:
in the case that a queuing scheduling mechanism corresponding to a first network node is the TAS scheduling mechanism, determining, according to the TAS gate list and a first CQF delay, a time at which the first network node sends or receives a message; wherein in the target forwarding path, it reaches the first network node from a second network node via number N of third network nodes, the second network node corresponds to the TAS scheduling mechanism, the third network node corresponds to the CQF scheduling mechanism, and the first CQF delay is determined according to the number N and the CQF period; and/or
in the case that a queuing scheduling mechanism corresponding to a fourth network node is the CQF scheduling mechanism, determining, according to a size relationship between the first delay and the CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

4. The method according to claim 1 or 2, wherein the queuing scheduling mechanisms corresponding to the at least two network nodes comprise a Cycle Queuing Forwarding (CQF) scheduling mechanism and a deadline based scheduling mechanism, the queuing scheduling mechanism parameter corresponding to the CQF scheduling mechanism comprises a CQF period, and the queuing scheduling mechanism parameter corresponding to the deadline based scheduling mechanism comprises an expected remaining time of each network node; and
the determining the target scheduling parameter corresponding to each of the at least two network nodes according to the queuing scheduling mechanism parameters corresponding to the network nodes comprises:
in the case that a queuing scheduling mechanism corresponding to a seventh network node is the deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that a queuing scheduling mechanism corresponding to a tenth network node is the CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

5. The method according to claim 1 or 2, wherein the queuing scheduling mechanisms corresponding to the at least two network nodes comprise a Time-Aware Shaper (TAS) scheduling mechanism and a deadline based scheduling mechanism, and the queuing scheduling mechanism parameter corresponding to the TAS scheduling mechanism comprises a TAS gate list, and the TAS gate list is used to indicate a time at which each network node sends a message; the queuing scheduling mechanism parameter corresponding to the deadline based scheduling mechanism comprises an expected remaining time of each network node;
the determining the target scheduling parameter corresponding to each of the at least two network nodes according to the queuing scheduling mechanism parameters corresponding to the at least two network nodes comprises:
in the case that a queuing scheduling mechanism corresponding to a thirteenth network node is the TAS scheduling mechanism, determining, according to the TAS gate list and a third delay, a time at which the thirteenth network node sends or receives a message; wherein in the target forwarding path, it reaches the thirteenth network node from a fourteenth network node via number L of fifteenth network nodes, the fifteenth network node corresponds to the TAS scheduling mechanism, the fourteenth network node corresponds to the deadline based scheduling mechanism, and the third delay is determined according to a time during which the message is transmitted between the number L of fifteenth network nodes; and/or
in the case that a queuing scheduling mechanism corresponding to the fifteenth network node is the deadline based scheduling mechanism, determining, according to a fourth delay, an actual remaining time corresponding to the fifteenth network node; wherein in the target forwarding path, it reaches the fifteenth network node from a sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

6. The method according to claim 1, wherein the sending the target scheduling parameter to the deterministic service forwarding unit comprises:
encapsulating the target scheduling parameter using an Internet Protocol version 6 (IPv6) extension header and/or a Differentiated Services Code Point (DSCP) field and sending the encapsulated target scheduling parameter to the deterministic service forwarding unit; the target scheduling parameter is used by the network node to identify the target scheduling parameter and perform corresponding queuing scheduling processing.

7. A method for processing of a deterministic service, applied to a deterministic service forwarding unit, the method comprising:
obtaining a target scheduling parameter corresponding to each network node in a target forwarding path, wherein the target forwarding path comprises at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
controlling each of the network nodes to forward a message according to the target scheduling parameter.

8. The method according to claim 7, wherein the queuing scheduling mechanisms corresponding to the at least two network nodes comprise a Time-Aware Shaper (TAS) scheduling mechanism and a Cycle Queuing Forwarding (CQF) scheduling mechanism, the queuing scheduling mechanism parameter corresponding to the TAS scheduling mechanism comprises a TAS gate list, the queuing scheduling mechanism parameter corresponding to the CQF scheduling mechanism comprises a CQF period, and the TAS gate list is used to indicate a time at which each network node sends a message; and
the obtaining the target scheduling parameter corresponding to each network node in the target forwarding path comprises:
in the case that a target scheduling parameter of a fourth network node comprises a queuing identifier, and the queuing identifier indicates that a scheduling mechanism corresponding to the fourth network node is the CQF scheduling mechanism, determining, according to a size relationship between a first delay and a CQF period, a CQF period corresponding to a time at which the fourth network node sends a message and/or a CQF period corresponding to a time at which the fourth network node receives a message; wherein, in the target forwarding path, it reaches the fourth network node from a fifth network node via number M of sixth network nodes, the fifth network node corresponds to the CQF scheduling mechanism, the sixth network node corresponds to the TAS scheduling mechanism, and the first delay is determined according to a time during which the message determined according to the TAS gate list is transmitted between the number M of sixth network nodes.

9. The method according to claim 7, wherein the queuing scheduling mechanisms corresponding to the at least two network nodes comprise a Cycle Queuing Forwarding (CQF) scheduling mechanism and a deadline based scheduling mechanism, the queuing scheduling mechanism parameter corresponding to the CQF scheduling mechanism comprises a CQF period, and the queuing scheduling mechanism parameter corresponding to the deadline based scheduling mechanism comprises an expected remaining time of each network node; and
the obtaining the target scheduling parameter corresponding to each network node in the target forwarding path comprises:
in the case that a target scheduling parameter corresponding to a seventh network node comprises a queuing identifier, and the queuing identifier indicates that a queuing scheduling mechanism corresponding to the seventh network node is the deadline based scheduling mechanism, determining, according to a second CQF delay and an expected remaining time corresponding to the seventh network node, an actual remaining time corresponding to the seventh network node; wherein in the target forwarding path, it reaches the seventh network node from an eighth network node via number P of ninth network nodes, the eighth network node corresponds to the deadline based scheduling mechanism, the ninth network node corresponds to the CQF scheduling mechanism, and the second CQF delay is determined according to the number P and the CQF period; and/or
in the case that the target scheduling parameter corresponding to a tenth network node comprises a queuing identifier, and the queuing identifier indicates that the queuing scheduling mechanism corresponding to a tenth network node is a CQF scheduling mechanism, determining, according to a size relationship between a ratio of a second delay to a CQF period and a preset threshold, a CQF period corresponding to a time at which the tenth network node sends a message and/or a CQF period corresponding to a time at which the tenth network node receives a message; wherein in the target forwarding path, it reaches the tenth network node from an eleventh network node via number Q of twelfth network nodes, the tenth network node corresponds to the CQF scheduling mechanism, the eleventh network node corresponds to the deadline based scheduling mechanism, and the second delay is determined according to a time during which the message determined by the TAS gate list is transmitted between the number Q of twelfth network nodes.

10. The method according to claim 7, wherein the queuing scheduling mechanisms corresponding to the at least two network nodes comprise a Time-Aware Shaper (TAS) scheduling mechanism and a deadline based scheduling mechanism, and the queuing scheduling mechanism parameter corresponding to the TAS scheduling mechanism comprises a TAS gate list, and the TAS gate list is used to indicate a time at which each network node sends a message; the queuing scheduling mechanism parameter corresponding to the deadline based scheduling mechanism comprises an expected remaining time of each network node;
the obtaining the target scheduling parameter corresponding to each network node in the target forwarding path comprises:
in the case that a target scheduling parameter of a fifteenth network node comprises a queuing identifier, and the queuing identifier indicates that a queuing scheduling mechanism corresponding to the fifteenth network node is the deadline based scheduling mechanism, determining, according to a fourth delay, an actual remaining time corresponding to the fifteenth network node; wherein in the target forwarding path, it reaches the fifteenth network node from a sixteenth network node via number S of sixteenth network nodes, the sixteenth network node corresponds to the deadline based scheduling mechanism, the sixteenth network node corresponds to the TAS scheduling mechanism, and the fourth delay is determined according to a time during which the message determined by the TAS gate list is transmitted between the number S of sixteenth network nodes.

11. A deterministic service processing apparatus, applied to a deterministic service control unit, the apparatus comprising:
a first determination module, configured to determine a target forwarding path according to a deterministic service demand, wherein the target forwarding path comprises at least two network nodes;
a second determination module, configured to determine, in the case that queuing scheduling mechanisms corresponding to the at least two network nodes are different, a target scheduling parameter corresponding to each of the at least two network nodes according to queuing scheduling mechanism parameters corresponding to the two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
a first transmission module, configured to send the target scheduling parameter to a deterministic service forwarding unit.

12. A deterministic service processing apparatus, applied to a deterministic service forwarding unit, the apparatus comprising:
a first acquisition module, configured to obtain a target scheduling parameter corresponding to each network node in a target forwarding path, wherein the target forwarding path comprises at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
a first processing module, configured to control each of the network nodes to forward a message according to the target scheduling parameter.

13. A deterministic service processing apparatus, applied to a deterministic service control unit, the apparatus comprising a first transceiver and a first processor;
the first processor is configured to: determine a target forwarding path according to a deterministic service demand, wherein the target forwarding path comprises at least two network nodes; in the case that queuing scheduling mechanisms corresponding to the at least two network nodes are different, determine a target scheduling parameter corresponding to each of the at least two network nodes according to queuing scheduling mechanism parameters corresponding to the two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
the first transceiver is configured to send the target scheduling parameter to a deterministic service forwarding unit.

14. A deterministic service processing apparatus, applied to a deterministic service forwarding unit, the apparatus comprising a second transceiver and a second processor;
the second transceiver is configured to obtain a target scheduling parameter corresponding to each network node in a target forwarding path, wherein the target forwarding path comprises at least two network nodes, and the queuing scheduling mechanisms corresponding to the at least two network nodes are different, the target scheduling parameter is determined according to the queuing scheduling mechanism parameters corresponding to the at least two network nodes, wherein the target scheduling parameter comprises a queuing identifier and a queuing parameter corresponding to the queuing identifier; or the target scheduling parameter comprises a queuing identifier, and the queuing identifier is used to indicate the queuing scheduling mechanism corresponding to the network node;
the second processor is configured to control each of the network nodes to forward a message according to the target scheduling parameter.

15. A deterministic service processing apparatus, comprising: a transceiver, a processor, a memory, and a program or instruction stored in the memory and executable on the processor; wherein, the processor is configured to execute the program or the instruction to implement the steps of the method according to any one of claims 1 to 6, or implement the steps of the method according to any one of claims 7 to 10.

16. A readable storage medium storing a program or instruction, wherein the program or instruction is used to be executed by a processor to implement the steps of the method according to any one of claims 1 to 6, or implement the steps of the method according to any one of claims 7 to 10.
